# FASCICULE DE BREVET EUROPEEN

(11) **EP 3 839 239 B1**
(45) Date de publication et mention de la délivrance du brevet: **29.05.2024**
(21) Numéro de dépôt: 20212384.0
(22) Date de dépôt: 08.12.2020
(51) Int. Cl.: F02M 25/06, F01M 13/00, F01M 13/02, F02M 35/10, F02M 35/104

(54) **MOTEUR THERMIQUE AVEC RÉPARTITEUR AVEC RAMPE RETOUR DE GAZ DE BLOWBY INTÉGRÉE**
VERBRENNUNGSMOTOR MIT ANSAUGKRÜMMER MIT INTEGRIERTER KURBELGEHÄUSEENTLÜFTUNGSGASERÜCKLAUFLEITUNG
COMBUSTION ENGINE WITH MANIFOLD WITH INTEGRATED BLOW-BY RAIL

(30) Priorité: 20.12.2019 FR 1915168
(43) Date de publication de la demande: 23.06.2021
(73) Titulaire: NEW H POWERTRAIN HOLDING, S.L.U., 47008 Valladolid (ES)
(72) Inventeur: Millon, Jean-Pierre, 78870 Bailly (FR); POMMERY, William, 95560 MONTSOULT (FR)
(74) Mandataire: Renault Group

(56) Documents cités:
- EP-A2- 1 659 328
- WO-A1-2011/120933
- DE-A1-102011 011 719
- US-A1- 2006 000 459
- US-A1- 2008 230 930
- US-A1- 2010 294 225
- US-A1- 2017 306 895

## Description

### Domaine technique de l'invention

La présente invention concerne un moteur à combustion interne.

La présente invention concerne également un véhicule automobile équipé d'un moteur thermique avec un dispositif d'injection indirecte de gaz ou de carburant dans un circuit d'admission d'air dudit moteur.

La présente invention concerne plus particulièrement un agencement de la fixation d'un répartiteur d'air d'admission contre une culasse de moteur thermique.

### Etat de la technique

Un véhicule automobile connait de plus en plus de contraintes de réduction d'encombrement de ses équipements pour des raisons d'esthétique ou de confort des passagers. En particulier, le véhicule équipé d'un moteur thermique appelé aussi à combustion interne comporte un compartiment moteur dans lequel est logé un groupe motopropulseur comprenant le moteur et ses éléments ou accessoires, dont les dimensions sont de plus en plus réduites entrainant des recherches d'améliorations en termes de compacité du moteur et de ses éléments ou accessoires.

Ainsi il est prévu d'optimiser l'espace du compartiment moteur d'une part en réduisant le volume du moteur et de ses éléments ou accessoires et d'autre part en agençant de façon astucieuse le moteur et les accessoires entre eux.

Un moteur thermique comprend de manière connue un carter-cylindres sur lequel est monté une culasse. Dans ladite culasse sont creusés des conduits d'admission d'air qui mènent à des cylindres. La culasse présente une face dite « admission » contre laquelle est fixé un répartiteur d'admission apte à diriger de l'air ou des gaz d'amission vers les conduits d'admission creusés dans la culasse et connectés avec les cylindres, et une face dite « échappement » contre laquelle est fixé un collecteur d'échappement pour récupérer les gaz brulés issus de la combustion dans les cylindres du moteur.

L'air et/ou les gaz d'admission sont dirigés vers le répartiteur d'admission en ayant été au préalable compressés au passage d'un compresseur qui est par exemple l'étage de compression d'un turbocompresseur. Afin d'améliorer l'efficacité et le rendement du moteur, l'air d'admission est refroidi avant son admission dans les cylindres du moteur. Ainsi un étage de refroidisseur est installé dans le circuit d'admission d'air en amont de la culasse selon le sens de circulation de l'air d'admission. Cet étage de refroidisseur comprend par exemple un échangeur air/eau par lequel l'air compressé chaud cède une partie de sa chaleur à de l'eau ou à un liquide de refroidissement. L'échangeur de chaleur est logé dans un carter qui est prolongé en aval par une bride de fixation selon le sens de circulation de l'air d'admission, formant une chambre avec par exemple un renfoncement de la culasse. Ladite chambre forme un plénum de répartiteur d'admission.

Pour réduire le poids du moteur, le carter est fixé contre la face d'admission de la culasse grâce à la bride. La fixation de ce carter doit répondre à des contraintes mécaniques fortes qui nécessitent des pièces de grande rigidité en matériau métallique comme de l'acier ou d'alliage d'acier ou d'alliage d'aluminium ou de plastique technique.

De plus, pour optimiser l'occupation de l'espace du compartiment moteur, ledit carter est fixé selon une direction oblique par rapport à la face d'admission de la culasse. Ladite face d'admission s'étend sensiblement selon un plan vertical.

Les moteurs à injection indirecte de carburant liquide ou de gaz comportent un conduit d'injection de carburant liquide ou de gaz dans le circuit d'admission d'air. L'injection est généralement effectuée en amont des cylindres du moteur dans des conduits d'admission d'air creusés dans la culasse.

Ainsi des conduits d'injection de carburant ou de gaz sont percés depuis une face d'admission de la culasse pour déboucher de façon oblique dans un canal d'admission d'air. Le carburant est ainsi mélangé avec l'air d'admission avant son introduction dans une chambre de combustion à l'ouverture d'un accès contrôlé par une soupape d'admission. Ladite chambre à combustion est délimitée par la paroi longitudinale du cylindre, un piston et une paroi inférieure de la culasse.

Afin de réduire les rejets de polluants générés par la combustion dans les moteurs thermiques, les gaz brulés dans ladite chambre expulsés via des conduits d'échappement vers un circuit d'échappement sont ramenés ver l'admission du moteur. On distingue au moins trois types de gaz brulés dit recirculés réintroduits à l'admission :
- les gaz recirculés dits haute pression sont prélevés directement à la sortie de la face échappement du moteur par exemple depuis une chambre creusée dans la culasse ou depuis un collecteur d'échappement fixé à ladite culasse.
- les gaz recirculés dits basse pression sont prélevés plus en aval selon le sens d'écoulement des gaz et notamment au niveau ou en aval d'un dispositif de dépollution des gaz brulés tels qu'un catalyseur ou un piège à Nox ou oxydes d'azote.
- les gaz déshuilés dits de « blow-by » en anglais désignent des gaz issus de vapeurs d'huile qui passent par un décanteur d'huile fixé au moteur. Les gaz déshuilés sont ainsi ramenés depuis le décanteur et introduits dans le répartiteur d'admission, notamment dans le plénum du répartiteur. Les gaz déshuilés sont injectés dans le plénum grâce à une rampe disposée transversalement au flux d'admission dans la culasse et qui comprend des canaux d'injection notamment au droit des débouchés des conduits d'admission de la culasse.

L'accès des conduits d'échappement est contrôlé par des soupapes d'échappement.

Les ouvertures et fermetures des accès des conduits d'admission et d'échappement peuvent entrainer des refoulements des flux d'air à l'admission. Lesdits refoulements sont connus sous le nom de « back-flow » en anglais. Lesdits refoulements ne concernent pas l'ensemble des conduits d'admission en même temps et peuvent se produire de manière aléatoire dans une des conduits d'admission jusque dans le plénum d'admission. Les reflux doivent être contrôlés car d'une part les gaz peuvent contenir du carburant et d'autre part modifier les conditions de fonctionnement du moteur. En effet, les reflux peuvent remonter jusque dans canaux d'injection des gaz déshuilés.

La publication FR2884875-A1 propose un conduit de balayage débouchant dans la chambre à combustion et connecté au circuit d'admission d'air et contrôlé par une soupape de balayage agencée en amont selon le sens de circulation de l'air d'admission.

Un inconvénient concerne le système d'ouverture de la soupape de balayage et son agencement.

Le but de l'invention de remédier à ces problèmes et l'objet de l'invention est un agencement de fixation d'un échangeur de chaleur, notamment d'un répartiteur d'admission à une paroi d'admission d'une culasse de moteur thermique avec une injection indirecte de carburant ou de gaz, ledit répartiteur est connecté en amont à un circuit d'admission d'air et en aval à des conduits d'admission creusés dans la culasse et comprend des orifices d'admission de gaz déshuilés, ledit agencement permet une isolation aéraulique de chacun des conduits d'admission et de contrôler les refoulements de gaz à l'admission.

La publication EP1659328-A2 divulgue le préambule objet de la revendication 1.

### Présentation de l'invention

La présente invention concerne un agencement de fixation d'un circuit d'admission d'air à une paroi d'admission d'une culasse d'un moteur thermique à injection indirecte de carburant.

La présente invention concerne plus particulièrement un répartiteur d'admission d'air de moteur thermique à injection indirecte de carburant qui comprend une culasse dans laquelle sont creusés des conduits tubulaires d'admission qui débouchent d'un côté dans une chambre d'admission entourée par le répartiteur d'admission, et du côté opposé dans une chambre à combustion délimitée par un cylindre, un piston et la paroi inférieure de la culasse, ledit répartiteur comportant des orifices d'entrée d'une rampe d'alimentation de gaz déshuilés, caractérisé en ce que la chambre d'admission est divisée en compartiments dont chacun est dédié par cylindre et qui comprend un dispositif d'admission des gaz déshuilés apte à contrôler l'étanchéité aéraulique entre deux compartiments voisins.

De manière générale, la chambre d'admission ou plénum de gaz et d'air d'admission est divisée en compartiments, chacun desdits compartiments est dédié à un cylindre particulier c'est-à-dire connecté à un cylindre particulier pour amener l'air et les gaz recirculés dans la chambre à combustion délimitée par ledit cylindre. La chambre d'admission est recouverte par un répartiteur ou par une bride de fixation du répartiteur. De manière avantageuse, la chambre d'admission est divisée en compartiment par au-moins une paroi de séparation qui s'étend parallèlement à l'axe d'écoulement d'air et de gaz et orthogonalement à la paroi de fixation de la culasse. Chaque compartiment communique avec une seule chambre à combustion spécifique. On obtient ainsi un flux d'air distinct par poste ou par chambre à combustion afin d'isoler le risque de refoulement par poste et ne pas impacter les postes voisins.

Chaque compartiment comporte un dispositif d'admission des gaz déshuilés spécifique apte à contrôler l'étanchéité vis-à-vis du compartiment voisin notamment apte à éviter les communications de gaz par les orifices d'entrée de gaz déshuilés.

Selon d'autres caractéristiques de l'invention :
- le dispositif d'admission est apte à interdire le passage de gaz et d'air depuis le compartiment vers la rampe d'alimentation des gaz déshuilés.

Selon l'invention le dispositif d'admission est apte à interdire le passage de gaz et d'air depuis le compartiment vers la rampe d'alimentation, ladite rampe connecté avec tous les compartiments de la chambre d'admission. Ledit dispositif interdit donc une circulation de gaz en sortie d'un compartiment vers la rampe d'alimentation et donc potentiellement vers les autres compartiments.
- le dispositif permet le passage des gaz déshuilés depuis la rampe d'alimentation vers le compartiment.

De manière avantageuse, le dispositif d'admission permet le passage des gaz déshuilés depuis la rampe d'alimentation vers le compartiment de la chambre d'admission pour permettre le mélange des gaz déshuilés avec l'air.
- selon l'invention, le dispositif est logé dans une paroi de fixation du répartiteur contre la culasse.

Selon l'invention, le dispositif d'admission est logé dans une paroi de fixation du répartiteur et de manière avantageuse au plus près de la culasse une fois le répartiteur monté fixé contre ladite culasse, ce qui facilite le montage dudit dispositif indépendamment du répartiteur.
- le dispositif est agencé en bordure de la paroi de fixation de la bride contre la culasse. De manière avantageuse, le dispositif est agencé en bordure de la paroi de fixation de la bride pour faciliter l'agencement.
- la rampe d'alimentation est creusée dans le répartiteur.

De manière avantageuse, la rampe d'alimentation de gaz déshuilés est creusée dans le répartiteur, notamment dans la bride de fixation du répartiteur pour faciliter l'obtention de la rampe.
- la rampe d'alimentation comporte une ouverture longitudinale sur toute la longueur de la rampe et destinée en vis-à-vis avec la culasse.

De manière avantageuse, la rampe d'alimentation comprend une ouverture longitudinale sur toute la longueur de la rampe qui s'étend de façon orthogonale à la direction du flux d'air d'admission. Ladite ouverture est fermée par la paroi de la culasse lorsque le répartiteur est monté et fixé contre la culasse.
- le dispositif comprend un moyen élastique de contrôle de passage de flux de gaz.

Selon l'invention, le dispositif comprend un moyen élastique de contrôle du passage de flux de gaz au travers de l'ouverture d'entrée des gaz déshuilés. Le moyen élastique oscille entre une position d'obturation de l'ouverture qui peut être la position de repos et une position de passage où les gaz déshuilés peuvent traverser l'ouverture vers le plénum.
- le dispositif comprend une membrane élastique recouvrant l'ouverture d'entrée des gaz déshuilés.

De manière avantageuse, le dispositif comprend une membrane élastique recouvrant l'ouverture d'entrée des gaz déshuilés, et mobile entre une position de l'obturation de l'ouverture en position de repos et une position d'ouverture quand la membrane est aspirée.
- le dispositif comprend un clapet anti-retour disposé dans un conduit d'amenée connecté à la rampe d'alimentation d'un côté et à la chambre d'admission du côté opposé.

De manière avantageuse, le dispositif comprend un clapet anti-retour disposé dans un conduit d'amenée connecté à la rampe d'alimentation d'un côté et à la chambre d'admission du côté opposé pour interdire le passage de flux de gaz depuis de compartiment vers la rampe et d'autoriser le flux de gaz déshuilés depuis la chambre vers le compartiment, tout en ayant le moins d'impact possible sur le flux principal d'air et de gaz d'admission dans le plénum vers les conduits d'admission de la culasse.

Ledit clapet peut être enfoncé dans le conduit d'amenée.
- la rampe d'alimentation est entourée par un joint d'étanchéité comprenant un jonc supérieur s'étendant sensiblement parallèlement à la rampe et disposé entre la rampe et le plénum, et un jonc inférieur s'étendant sensiblement parallèlement à la rampe et disposé entre la rampe et l'extérieur du répartiteur.

Selon l'invention, la rampe d'alimentation de gaz brulés de blow-by est entourée autour de son pourtour par un joint d'étanchéité comprenant un jonc d'étanchéité supérieur s'étendant sensiblement parallèlement à la rampe et disposée entre la rampe et le plénum pour assurer l'étanchéité en bordure supérieure de la rampe, et un jonc d'étanchéité inférieur s'étendant sensiblement parallèlement à la rampe et disposé entre la rampe et l'extérieur du répartiteur pour assurer l'étanchéité de la rampe avec l'extérieur du répartiteur.
- le jonc supérieur et le jonc inférieur sont logés respectivement dans une cannelure supérieure et une cannelure inférieure creusées dans la paroi inférieure du répartiteur et s'étendant sensiblement parallèlement à la rampe d'alimentation.

De manière avantageuse, la paroi inférieure du répartiteur comprend une cannelure inférieure et une cannelure supérieure entourant la rampe d'alimentation pour accueillir le joint d'étanchéité et notamment respectivement le jonc d'étanchéité inférieur et le jonc d'étanchéité supérieur.
- le jonc supérieur d'étanchéité porte le moyen élastique de contrôle de passage de flux de gaz.

Selon l'invention, le jonc d'étanchéité supérieur porte le moyen élastique de contrôle de passage de flux de gaz assurant ainsi avec une seule pièce l'étanchéité aéraulique et le contrôle du passage de flux de gaz.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[Fig. 1] est une vue schématique de circuit d'admission d'air fixé à une culasse de moteur.
[Fig. 2] est une vue schématique de coupe transversale d'une culasse avec un répartiteur en extrémité d'un échangeur fixés à une culasse selon l'invention.
[Fig. 3] est une vue schématique du répartiteur selon l'invention.
[Fig. 4] est une vue schématique de coupe transversale du répartiteur selon l'invention.
[Fig. 5] est une vue schématique d'un moyen de contrôle de flux de gaz selon l'invention.
[Fig. 6] est une vue schématique d'un moyen de contrôle de flux de gaz selon l'invention.
[Fig. 7] est une vue schématique d'un joint d'étanchéité destiné à être fixé entre le répartiteur et la culasse.

### Description détaillée des figures

Dans la description qui va suivre, des chiffres de référence identiques désignent des pièces identiques ou ayant des fonctions similaires.

On désigne par axe vertical un axe orthogonal au plan inférieur de contact de la culasse avec un carter-cylindre, l'axe étant tourné vers le haut à l'opposé du carter-cylindre.

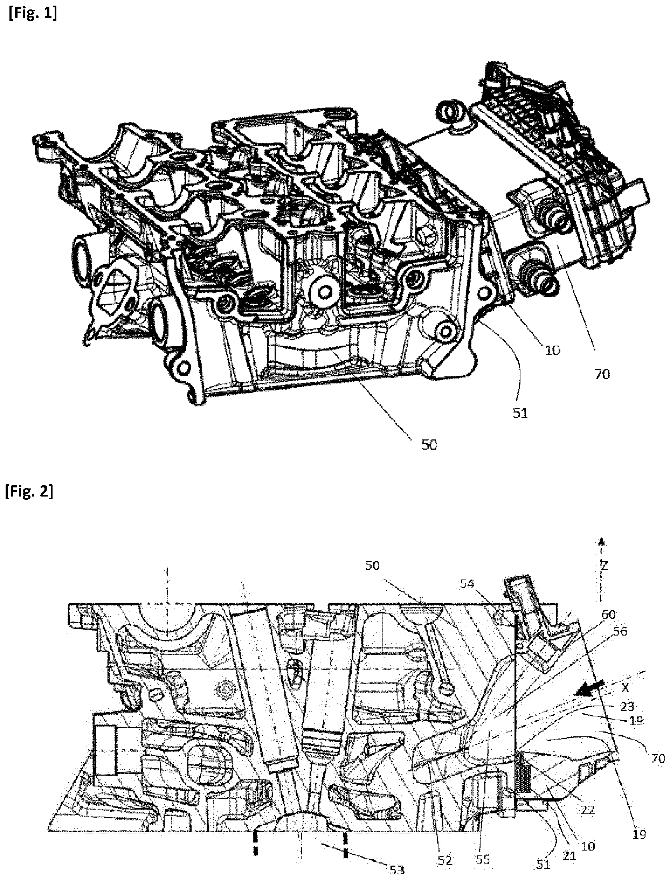

De manière connue, un moteur thermique de véhicule est alimenté en air par un circuit d'admission. Ainsi de l'air est capté depuis la face avant du véhicule et conduit jusqu'à une paroi d'admission du moteur, notamment d'une culasse dudit moteur. L'air peut passer par exemple par un filtre à air, par un étage de compression qui peut-être un compresseur d'un turbo-compresseur. L'air d'admission est ensuite refroidi pour assurer une meilleure efficacité du moteur, en passant par un échangeur de chaleur 50 comme représenté en figure 1, généralement de type eau/air par lequel l'air transfère une partie de sa chaleur à un liquide de refroidissement à base d'eau. En sortie de l'échangeur, l'air est amené dans un répartiteur d'admission 10 qui est fixé contre la paroi d'admission 51 de la culasse 50 du moteur. Le répartiteur 10 comprend un plénum ou chambre d'admission ou de répartition 11 connecté à des chambres de combustion 53 du moteur via des canaux d'admission 52 creusés dans la culasse. Chacune desdites chambres de combustion est délimitée par un cylindre creusé dans un carter-cylindres, un piston qui est mobile en coulissement selon l'axe du cylindre et une face inférieure de la culasse.

On connait les moteurs thermiques à injection directe dans lesquels un injecteur de carburant pulvérise du carburant directement dans la chambre à combustion 53. Ce type de moteur nécessite un injecteur de carburant de forte puissance pour faire face aux pressions élevées dans la chambre à combustion.

On connait les moteurs thermiques à injection indirecte dans lesquels un injecteur 60 injecte du carburant dans le circuit d'admission d'air en amont selon le sens de circulation d'air de la chambre à combustion. Le carburant n'est pas injecté dans le cylindre mais en amont, dans un canal d'admission 52 ou dans le répartiteur 10 pour que le carburant se mélange avec l'air ou les gaz d'admission de manière homogène avant l'admission dans la chambre à combustion. Cela permet d'avoir une meilleure combustion et donc moins de particules fines qui sont un des problèmes des moteurs modernes. Le carburant se vaporise sous l'effet de la chaleur et brûle de manière optimale une fois arrivé dans la chambre de combustion.

Notre invention concerne un moteur thermique à injection indirecte. Le carburant est injecté par un injecteur dans un canal d'admission d'air 60, plus précisément, l'injecteur est logé dans un conduit d'injection 54 qui débouche dans un canal d'admission 52 d'air de la culasse 50.

Selon la figure 2, le plénum 11 est composé par un enfoncement 55 de la paroi d'admission de la culasse et par une chambre 12 délimitée par les parois du répartiteur d'admission 10 recouvrant l'enfoncement. Les canaux d'admission 52 creusés dans la culasse débouchent donc dans l'enfoncement 55.

Ledit enfoncement 55 est divisé par au-moins une paroi de séparation 56, en au-moins une cavité d'admission 57. Chacune des cavités 57 est connectée à une unique chambre de combustion 53 par les canaux d'admission 52, et ladite chambre à combustion n'est connectée qu'à une seule cavité d'admission 57. De façon claire, le couple (cavité d'admission, chambre à combustion) est unique.

La paroi de séparation 56 s'étend depuis la surface de l'enfoncement 55 de la culasse vers l'extérieur, parallèlement à un plan formé par l'axe d'écoulement de l'air d'admission X et un axe vertical Z. La direction d'écoulement d'air est désignée par une flèche.

Selon les figures 1 à 3, un échangeur de chaleur 70 est fixé contre la paroi d'admission 51 de la culasse 50 par une bride de fixation 10. Ladite bride de fixation 10 entoure un espace de passage d'air 13 présentant une section de passage 14 d'air sensiblement rectangulaire et délimité par une paroi inférieure 15, une paroi supérieure 16 en vis-à-vis avec la paroi inférieure et deux parois latérales 17 orthogonales auxdites parois inférieure 15 et supérieure 16. Les parois latérales 17 sont en forme de trapèze pour permettre une fixation oblique de l'échangeur de chaleur 70 à la paroi verticale 51 d'admission de la culasse 50.

La bride fait office de répartiteur 10 et le plénum comprend 'espace de passage d'air 13. On utilisera par la suite les noms de bride ou de répartiteur pour définir la même pièce qui assure la fixation de l'échangeur et qui permet le mélange des gaz avant leur admission dans les canaux d'admission de la culasse, selon la fonction assurée.

La bride 10 comprend un trottoir 18 périphérique de fixation qui est destiné en appui contre la paroi d'admission 51 de la culasse. Dans le trottoir de fixation 18 sont aménagés des orifices traversant pour recevoir des vis de fixation qui sont enfoncées dans la paroi d'admission 51 de la culasse.

Le répartiteur 10 comprend des cloisons intérieures 19 de séparation sensiblement parallèles aux parois latérales 17, lesdites cloisons intérieures 19 sont dans le prolongement des parois de séparation 56 dans l'enfoncement 55 de la culasse. Les closions intérieures 19 divisent l'espace de passage d'air 13 en compartiments de passage d'air 20. Ainsi chaque compartiment 20 est isolé de façon aéraulique du compartiment voisin et est connecté à une unique cavité 57 d'admission de la culasse et donc à une unique chambre de combustion 53 quand le répartiteur est monté fixé contre la culasse. Plus précisément la cavité d'admission 57 de la culasse est dans le prolongement de façon sensiblement rectiligne du compartiment de passage 20 du répartiteur 10.

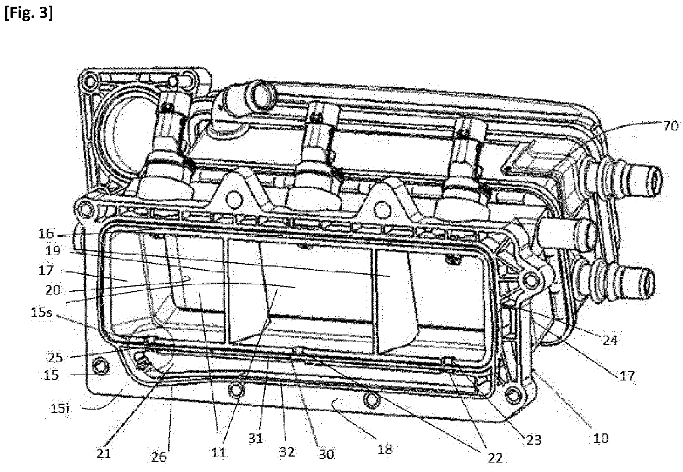

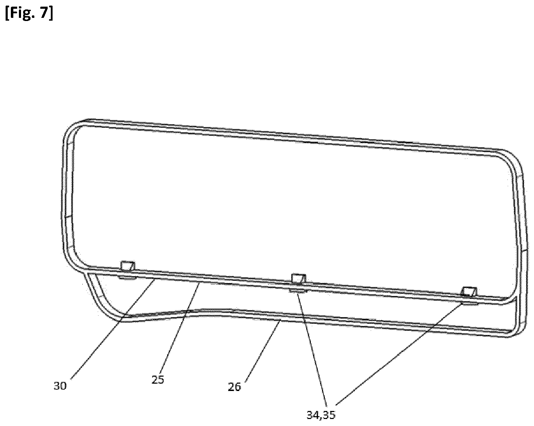

De manière préférentielle, un joint d'étanchéité aéraulique est disposé entre le répartiteur 10 et la paroi d'admission 51 de la culasse 50. Plus précisément, la section de passage du répartiteur est entourée par le joint comme représenté en figure 3 et 7.

Une rampe d'alimentation 21 de gaz déshuilés est creusée dans la paroi inférieure 15 de la bride 10. Ladite rampe 21 est plus précisément formée par une tranchée creusée dans le trottoir de fixation 18. La rampe présente donc une ouverture 21l s'étendant sur toute la longueur de la rampe d'alimentation 21 et destinée en vis-à-vis avec la paroi de fixation 51 de la culasse 50.

La rampe d'alimentation 21 est prolongée de façon transversale à son axe par des conduits d'amenée 22 de gaz déshuilés qui débouchent de la paroi inférieure 15 dans le plénum 11 par des ouvertures de gaz déshuilés 23. Le diamètre des ouvertures est de l'ordre de quelques millimètres par exemple 5 mm.

Les ouvertures 23 des conduits d'amenée 22 dans le plénum 11 sont contrôlés par un dispositif d'admission 100 des gaz déshuilés. Ce dispositif permet d'assurer une étanchéité aéraulique de chaque compartiment de passage 20.

Pour assurer l'étanchéité aéraulique du répartiteur, le trottoir périphérique 18 comprend rainure périphérique 24 destinée à accueillir un joint d'étanchéité 30.

Selon l'invention, afin d'assurer l'isolation de chaque compartiment, la rampe d'alimentation 21 connectée à tous les compartiments 20 de passage du plénum est étanche par rapport au plénum 11.

La paroi inférieure 15 du répartiteur 10 comprend un bord supérieur 15s délimitant le plénum et un bord inférieur 15i tourné vers l'extérieur du répartiteur.

Sur la paroi inférieure 15 du répartiteur 10 la rainure périphérique 24 comprend deux branches de rainures 25, 26 aptes à accueillir chacune un jonc d'étanchéité 31,32 et entourant totalement la rampe d'alimentation 21. Une première cannelure 25 s'étend transversalement à l'axe d'écoulement des gaz, de façon sensiblement parallèle à la rampe d'alimentation 21 et elle est disposée entre la rampe d'alimentation 21 et le bord supérieur 15s de la paroi inférieure 15. Une deuxième cannelure 32 entoure la rampe 21 et s'étend également transversalement à l'axe d'écoulement des gaz et d'air d'admission, de façon sensiblement parallèle à la rampe d'alimentation 21 ; elle est disposée entre la rampe d'alimentation 21 et le bord inférieur 15i de la paroi inférieure 15.

Un premier jonc 31 d'étanchéité est disposé dans la première cannelure 25. Le premier jonc assure l'étanchéité du plénum 11 vis-à-vis de la rampe d'alimentation 21. Un deuxième jonc d'étanchéité 32 est disposé dans la deuxième cannelure 26. Le deuxième jonc 32 assure l'étanchéité de la partie basse du répartiteur en particulier de la rampe 21 de gaz déshuilés vis-à-vis de l'extérieur du répartiteur.

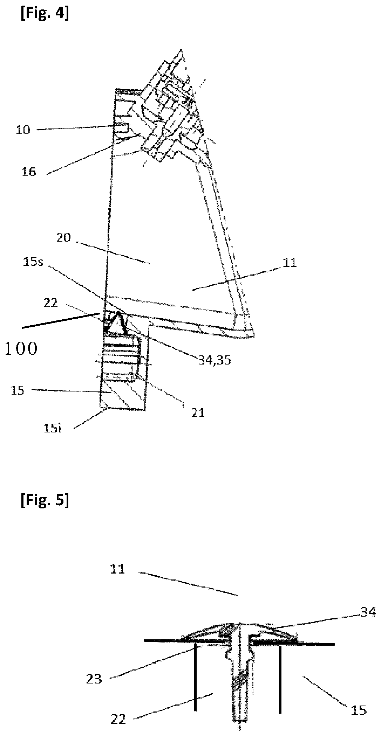

Selon la figure 4, le dispositif 100 selon l'invention comprend un moyen élastique 33 qui bascule d'une position de repos où il obture l'ouverture d'entrée 23 des gaz déshuilés à une position d'ouverture où les passages de gaz sont autorisés depuis la rampe d'alimentation 21 vers le plénum 11.

Selon un premier mode de réalisation représenté en figure 5, le dispositif 100 comprend une membrane élastique 34 par exemple en élastomère recouvrant l'ouverture 23 des gaz déshuilés. Ladite membrane 34 est agencée contre la paroi inférieure 15 du répartiteur, dans le plénum 11. Ladite membrane est apte à se déformer par une aspiration et libérer l'ouverture 23.

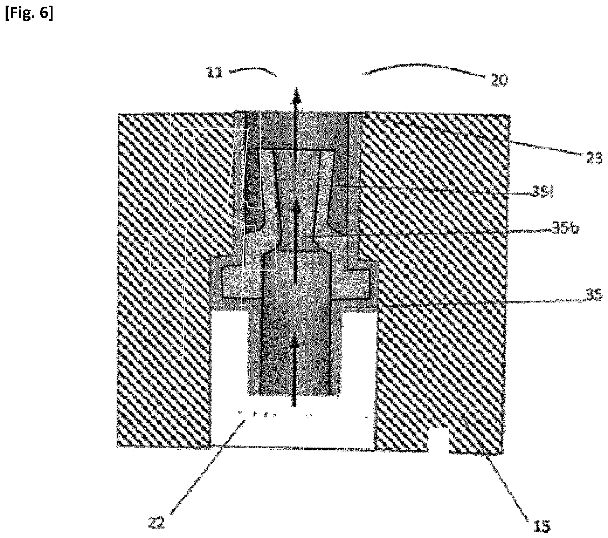

Selon un deuxième mode de réalisation représenté en figure 6, le dispositif 100 comprend un clapet anti-retour 35 installé dans chaque conduit d'amenée 22, de manière préférentielle de façon à ne pas déborder dans le plenum 11 et ainsi éviter tout impact sur les flux d'admission d'air dans le compartiment 24 de passage d'air. Le clapet anti-retour peut être de toute forme ; par exemple il peut être constitué par une bouche 35b entourée par des lèvres 35l qui sont aptes à se séparer pour autoriser le passage des gaz déshuilés ou se rejoindre pour obturer l'ouverture.

Selon un troisième mode de réalisation représenté en figure 7, le dispositif 100 est partie du joint d'étanchéité 30 disposé entre le répartiteur 10 et la culasse 50. Le premier jonc 31 porte par exemple les clapets anti-retour 27 qui sont installés dans des rainures transversales à la première cannelure 30 formant les conduits d'amenée de gaz déshuilés, et qui débouchent de la paroi inférieure 15 dans le plénum 11. Le joint d'étanchéité et notamment le premier jonc est apte à assurer d'une part l'étanchéité aéraulique de la rampe d'alimentation 21 vis-à-vis du plénum 11 et d'autre part de contrôler le passage des gaz de ladite rampe vers le plénum.

Ainsi chaque compartiment de passage d'air 24 est isolé de façon aéraulique du (ou des) compartiment(s) voisin(s). La rampe d'alimentation 21 de gaz déshuilés étant connectée à tous les compartiments 24 de passage ne présente plus de risque de connexion aéraulique entre des compartiments 24.

Le dispositif d'admission permet le passage des gaz déshuilés lors des phases ouvertures de soupapes d'admission pendant lesquelles on peut observer une dépression pouvant atteindre 800 mbar.

Lors de ces phases, selon le premier mode de réalisation, la membrane élastique est aspirée ce qui entraine le passage des gaz déshuilés dont le niveau de pression est de l'ordre de 950mbar. Les gaz déshuilés sont alors aspirés dans les canaux d'admission de la culasse.

Lors de ces phases, selon le deuxième mode de réalisation, les lèvres du clapet anti-retour se séparent du fait de la différence de pression entre la rampe d'alimentation et le plénum pour laisser les gaz déshuilés être aspirés et passer au travers de l'ouverture.

Puis lors des phases de refoulement, la pression dans le plénum est supérieure à la pression dans la rampe d'alimentation et vient selon le mode de réalisation plaquer la membrane sur la paroi inférieure 15 du répartiteur ou de plaquer les lèvres du clapet l'une contre l'autre pour obturer l'ouverture du débouché du conduit d'amenée.

L'objectif est atteint : le dispositif 100 d'admission des gaz déshuilés peut contrôler facilement et à couts faible l'étanchéité aéraulique de chaque compartiment de passage 24 d'air, notamment en obturant les conduits d'amenée 22 lors des phases de refoulement.

Comme il va de soi, l'invention ne se limite pas aux seules formes d'exécution de cette prise, décrites ci-dessus à titre d'exemples, elle en embrasse au contraire toutes les variantes.

Par exemple, le dispositif 100 peut comprend des volets basculants permettant une ouverture lors des phases d'aspirations et d'obturation.

Par exemple le joint d'étanchéité peut être un joint à base de silicone déposé sur la surface du trottoir de fixation et ne nécessitant pas de rainure périphérique.

La culasse ne comporte pas d'enfoncement qui fait partie du plénum et le canaux d'admission débouchent directement dans le répartiteur.

## Revendications

1. Moteur thermique à injection indirecte de carburant comportant un répartiteur d'admission (10) d'air du moteur thermique à injection indirecte de carburant qui comprend une culasse (50) dans laquelle sont creusés des conduits (52) tubulaires d'admission qui débouchent d'un côté dans une chambre d'admission (11) entourée par le répartiteur d'admission, et du côté opposé dans une chambre à combustion (53) délimitée par un cylindre, un piston et la paroi inférieure de la culasse, ledit répartiteur comportant des orifices d'entrée (23) d'une rampe d'alimentation (21) de gaz déshuilés, la chambre d'admission (11) étant divisée en compartiments (20) de passage d'air dont chacun est dédié à un cylindre et comprend un dispositif d'admission (100) des gaz déshuilés apte à contrôler l'étanchéité aéraulique entre deux compartiments (20) voisins, le dispositif d'admission (100) étant apte à interdire le passage de gaz et d'air depuis le compartiment correspondant (20) vers la rampe (21) d'alimentation des gaz déshuilés, le dispositif (100) permettant le passage des gaz déshuilés depuis la rampe d'alimentation (21) vers le compartiment de passage d'air correspondant (20), **caractérisé en ce que** le dispositif (100) est logé dans une paroi de fixation (15) du répartiteur (10) contre la culasse (50), le dispositif (100) comprenant un moyen élastique de contrôle (34,35) de passage de flux de gaz, la rampe d'alimentation (21) étant entourée par un joint d'étanchéité (30) comprenant un jonc supérieur (31) s'étendant sensiblement parallèlement à la rampe et disposé entre la rampe et la chambre d'admission (11), et un jonc inférieur (32) s'étendant sensiblement parallèlement à la rampe et disposé entre la rampe (21) et l'extérieur du répartiteur, le jonc supérieur d'étanchéité (31) portant le moyen élastique (34, 35) de contrôle de passage de flux de gaz.

2. Moteur thermique selon la revendication précédente, **caractérisé en ce que** le dispositif (100) est agencé en bordure de la paroi de fixation (15) du répartiteur (10) contre la culasse (50).

3. Moteur thermique selon l'une quelconque des revendications 1 à 2, **caractérisé en ce que** la rampe d'alimentation (21) est creusée dans le répartiteur (10).

4. Moteur thermique selon la revendication 3, **caractérisé en ce que** la rampe d'alimentation (21) comporte une ouverture longitudinale (21l) sur toute la longueur de la rampe (21) et destinée en vis-à-vis avec la culasse (50).

5. Moteur thermique selon l'une quelconque des revendications 1 à 4, **caractérisé en ce que** le dispositif (100) comprend une membrane élastique (34) recouvrant l'ouverture d'entrée des gaz déshuilés.

6. Moteur thermique selon l'une quelconque des revendications 1 à 5, **caractérisé en ce que** le dispositif (100) comprend un clapet anti-retour (35) disposé dans un conduit d'amenée (23) connecté à la rampe d'alimentation (21) d'un côté et à la chambre d'admission (11) du côté opposé.

7. Moteur thermique selon l'une quelconque des revendications précédente, **caractérisé en ce que** le jonc supérieur (31) et le jonc inférieur (32) sont logés respectivement dans une cannelure supérieure (25) et une cannelure inférieure (26) creusées dans la paroi inférieure (15) du répartiteur (10) et s'étendant sensiblement parallèlement à la rampe d'alimentation (21).

## Patentansprüche

1. Verbrennungsmotor mit indirekter Kraftstoffeinspritzung, mit einem Luftansaugverteiler (10) des Verbrennungsmotors mit indirekter Kraftstoffeinspritzung, der umfasst: einen Zylinderkopf (50), in dem rohrförmige Einlasskanäle (52) ausgehöhlt sind, die auf einer Seite in eine Einlasskammer (11) münden, die von dem Einlassverteiler umgeben ist, und auf der gegenüberliegenden Seite in eine Verbrennungskammer (53), die durch einen Zylinder, einen Kolben und die untere Wand des Zylinderkopfs begrenzt ist, wobei der Verteiler Eingangsöffnungen (23) einer Versorgungsrampe (21) für entölte Gase aufweist, wobei die Einlasskammer (11) in Luftdurchgangsabteil (20) unterteilt ist, von denen jedes einem Zylinder gewidmet ist, und eine Einlassvorrichtung (100) für entölte Gase umfasst, die geeignet ist, die lufttechnische Dichtigkeit zwischen zwei benachbarten Abteilen (20) zu kontrollieren, wobei die Einlassvorrichtung (100) geeignet ist, den Durchgang von Gasen und Luft von dem entsprechenden Abteil (20) zu der Versorgungsrampe (21) für entölte Gase zu unterbinden, wobei die Vorrichtung (100) den Durchgang von entölten Gasen von der Versorgungsrampe (21) zu dem entsprechenden Luftdurchgangsabteil (20) ermöglicht, **dadurch gekennzeichnet, dass** die Vorrichtung (100) in einer Befestigungswand (15) des Verteilers (10) gegen den Zylinderkopf (50) untergebracht ist, die Vorrichtung (100) umfassend ein elastisches Steuermittel (34, 35) für den Durchgang des Gasstrom, wobei die Versorgungsrampe (21) von einer Dichtung (30) umgeben ist, die einen oberen Wulst (31) umfasst, der sich im Wesentlichen parallel zu der Rampe erstreckt und zwischen der Rampe und der Einlasskammer (11) angeordnet ist, und einen unteren Wulst (32), der sich im Wesentlichen parallel zu der Rampe erstreckt und zwischen der Rampe (21) und der Außenseite des Verteilers angeordnet ist, wobei der obere Dichtungswulst (31) das elastische Steuermittel (34, 35) für den Durchgang des Gasstroms trägt.

2. Verbrennungsmotor nach dem vorstehenden Anspruch,
**dadurch gekennzeichnet, dass** die Vorrichtung (100) an dem Rand der Befestigungswand (15) des Verteilers (10) gegen den Zylinderkopf (50) angeordnet ist.

3. Verbrennungsmotor nach einem der Ansprüche 1 bis 2,
**dadurch gekennzeichnet, dass** die Versorgungsrampe (21) in den Verteiler (10) ausgehöhlt ist.

4. Verbrennungsmotor nach Anspruch 3, **dadurch gekennzeichnet, dass** die Versorgungsrampe (21) eine Längsöffnung (21l) aufweist, die sich über die gesamte Länge der Rampe (21) erstreckt und gegenüber dem Zylinderkopf (50) vorgesehen ist.

5. Verbrennungsmotor nach einem der Ansprüche 1 bis 4,
**dadurch gekennzeichnet, dass** die Vorrichtung (100) eine elastische Membran (34) umfasst, die die Eintrittsöffnung für entölte Gase abdeckt.

6. Verbrennungsmotor nach einem der Ansprüche 1 bis 5,
**dadurch gekennzeichnet, dass** die Vorrichtung (100) ein Rückschlagventil (35) umfasst, das in einer auf einer Seite mit der Versorgungsrampe (21) und auf der gegenüberliegenden Seite mit Einlasskammer (11) verbundenen Versorgungsleitung (23) angeordnet ist.

7. Verbrennungsmotor nach einem der vorstehenden Ansprüche,
**dadurch gekennzeichnet, dass** der obere Wulst (31) und der untere Wulst (32) jeweils in einer oberen Nut (25) und einer unteren Nut (26) untergebracht sind, die in der unteren Wand (15) des Verteilers (10) ausgehöhlt sind und sich im Wesentlichen parallel zu der Versorgungsrampe (21) erstrecken.

## Claims

1. An indirect fuel injection internal combustion engine with an air intake distributor (10) for the indirect fuel injection internal combustion engine, comprising a cylinder head (50) wherein tubular intake ducts (52) are hollowed out, which open on one side into an intake chamber (11) surrounded by the intake distributor, and on the opposite side into a combustion chamber (53) delimited by a cylinder, a piston and the lower wall of the cylinder head, said distributor comprising inlet orifices (23) for a de-oiled gas feed ramp (21), the intake chamber (11) being divided into air passage compartments (20), each of which is dedicated to a cylinder and comprises an intake device (100) for de-oiled gases capable of controlling the aeraulic seal between two adjacent compartments (20), the inlet device (100) being able to prevent the passage of gas and air from the corresponding compartment (20) to the de-oiled gas feed ramp (21), the device (100) allowing the passage of de-oiled gas from the feed ramp (21) to the corresponding air passage compartment (20), **characterized in that** the device (100) is housed in a fixing wall (15) of the distributor (10) against the cylinder head (50), the device (100) comprising elastic gas flow control means (34, 35), the feed ramp (21) being surrounded by a seal (30) comprising an upper bead (31) extending substantially parallel to the ramp and placed between the ramp and the intake chamber (11), and a lower bead (32) extending substantially parallel to the ramp and disposed between the ramp (21) and the outside of the distributor, the upper seal bead (31) carrying the resilient gas flow control means (34, 35).

2. The internal combustion engine according to the preceding claim, **characterized in that** the device (100) is arranged at the edge of the wall (15) securing the distributor (10) to the cylinder head (50).

3. The internal combustion engine according to any one of claims 1 to 2, **characterized in that** the feed ramp (21) is recessed in the distributor (10).

4. The internal combustion engine according to claim 3,
**characterized in that** the feed ramp (21) has a longitudinal opening (21l) running the length of the ramp (21) and intended to face the cylinder head (50).

5. The internal combustion engine according to any one of claims 1 to 4, **characterized in that** the device (100) comprises an elastic membrane (34) covering the de-oiled gas inlet opening.

6. The internal combustion engine according to any one of claims 1 to 5, **characterized in that** the device (100) comprises a check valve (35) arranged in a feed duct (23) connected to the feed ramp (21) on one side and to the intake chamber (11) on the opposite side.

7. The internal combustion engine according to any of the preceding claims, **characterized in that** the upper bead (31) and the lower bead (32) are housed respectively in a top spline (25) and a bottom spline (26) recessed in the bottom wall (15) of the distributor (10) and extending substantially parallel to the feed ramp (21).
